# EUROPÄISCHE PATENTANMELDUNG

(11) **EP 0 730 071 A1**
(43) Veröffentlichungstag der Anmeldung: **04.09.1996**
(21) Anmeldenummer: 95103074.1
(22) Anmeldetag: 03.03.1995
(51) Int. Cl.: E05B 49/00

(54) **Diebstahlschutzsystem für ein Kraftfahrzeug**

(71) Anmelder: SIEMENS AKTIENGESELLSCHAFT, 80333 München (DE)
(72) Erfinder: Glehr, Manfred, D-93073 Neutraubling (DE); Völkl, Peter, D-93105 Tegernheim (DE); Haimerl, Stefan, D-93142 Leonberg (DE)

(57) **Zusammenfassung**

Ein Schwingkreis (11, 12) eines Transceivers (1) in einem Kraftfahrzeug wird mit der Codeinformation eines tragbaren Transponders (2) moduliert. Ein Demodulator (31) erfaßt die Codeinformation und leitet sie an eine Recheneinheit (33) weiter, wo sie auf ihre Berechtigung hin überprüft wird. Infolge von Bauteiletoleranzen oder Temperaturänderungen kann es vorkommen, daß zunächst keine Codeinformation trotz korrekt arbeitendem Transponder (2) demoduliert wird. Erfindungsgemäß wird dann die Frequenz (f_{E}) der modulierten Schwingung gemessen und auf eine Sollfrequenz (f_{S}) zurückgeregelt.

## Beschreibung

Die Erfindung betrifft ein Diebstahlschutzsystem für ein Kraftfahrzeug. Sie betrifft insbesondere ein Schließsystem für Türen eines Kraftfahrzeugs und eine Wegfahrsperre, durch die bei Berechtigung ein Starten des Motors ermöglicht wird.

Ein bekanntes Diebstahlschutzsystem (US 4, 981, 955) weist ein Zündschloß mit einer Sendeantenne in Form einer Spule auf. Durch einen Oszillator wird die Spule erregt. Der Zündschlüssel weist einen Schwingkreis auf, der mit der Senderspule zusammenwirkt. Sobald der Zündschlüssel in das Zündschloß eingeführt ist, wird eine codierte Information von dem Zündschlüssel auf das Schloß übertragen. Wenn die codierte Information mit einer Sollcodeinformation übereinstimmt, wird eine Wegfahrsperre im Kraftfahrzeug freigegeben, so daß das Kraftfahrzeug gestartet werden kann.

Bei solchen Systemen kann es jedoch passieren, daß trotz eingestecktem und gut funktionierendem Zündschlüssel keine Codeinformation von einem Empfangskreis erkannt wird. Dies ist dadurch bedingt, daß sich ein Arbeitspunkt des Systems infolge von Bauteiletoleranzen oder Temperatureinfluß so weit verschiebt, daß er in einer sogenannten Nullstelle liegt.

Das Problem der Erfindung ist es, ein Diebstahlschutzsystem zu schaffen, durch das trotz Bauteiletoleranzen und Temperatureinfluß ein sicheres Betätigen von Türen oder ein Starten des Kraftfahrzeugs möglich ist.

Das Problem wird erfindungsgemäß durch die Merkmale von Patentanspruch 1 gelöst. Dabei weist ein Sender im Kraftfahrzeug einen Schwingkreis auf, der mit einem Schwingkreis eines tragbaren Transponders in einen Schlüssel induktiv gekoppelt ist. Im Sender wird eine Schwingung erzwungen, deren Energie zu dem Transponder übertragen wird, der seinerseits codierte Daten auf den Sender zurücküberträgt.

Die Codeinformation des Transponders moduliert dabei die Schwingung des Senderschwingkreises in ihrer Amplitude. Ein Demodulator gewinnt die Codeinformation aus der modulierten Schwingung, vergleicht sie mit einer Sollcodeinformation und bei Übereinstimmung wird ein Freigabesignal erzeugt.

Falls beim Versuch des Erfassens der Codeinformation zunächst kein Erfolg erzielt wird, so wird die Erregerfrequenz, die den Senderschwingkreis zum Schwingen anregt, gemessen, mit einer Sollfrequenz verglichen und bei Abweichung von der Sollfrequenz auf die Sollfrequenz zurückgeregelt.

Vorteilhafte Ausgestaltungen der Erfindung sind in den Unteransprüchen gekennzeichnet.

Ausführungsbeispiele der Erfindung sind anhand der schematischen Zeichnungen näher erläutert. Es zeigen:
- Figur 1: ein schematisches Blockschaltbild des erfindungsgemäßen Diebstahlschutzsystems,
- Figur 2: ein Blockschaltbild eines Senders und eines Empfängers des Diebstahlschutzsystems nach Figur 1,
- Figur 3: eine durch einen Transponder modulierte Schwingung in dem Empfänger des Diebstahlschutzsystems,
- Figur 4: eine Resonanzkurve eines Senderschwingkreises,
- Figur 5: ein Toleranzlagenschema, das die Lage eines Arbeitspunktes verdeutlicht, und
- Figur 6: eine Schaltungsanordnung des erfindungsgemäßen Diebstahlschutzsystems.

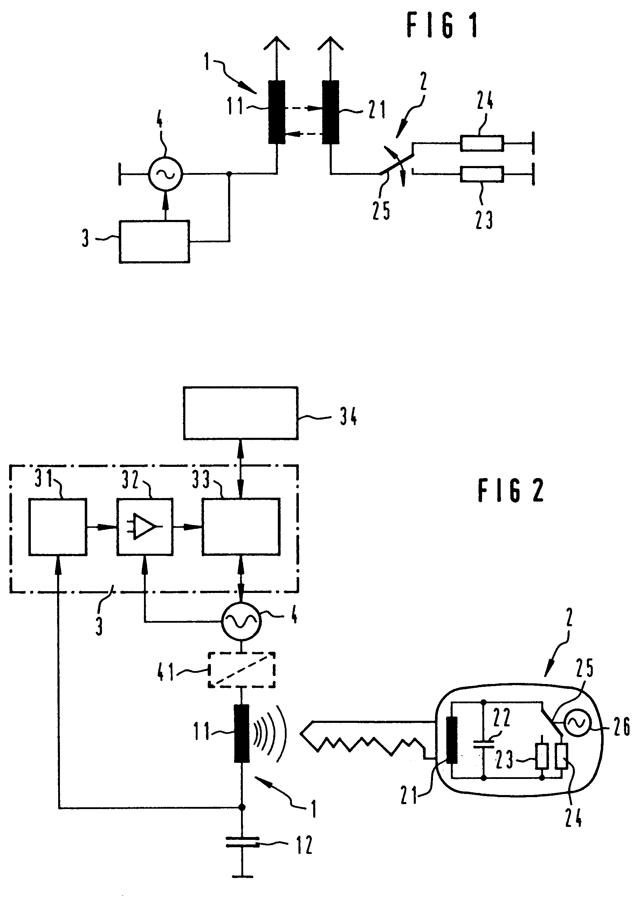

Ein erfindungsgemäßes Diebstahlschutzsystem weist einen Tranceiver 1 (Figur 1) in einem Kraftfahrzeug auf. Der Tranceiver 1 ist in der Nähe eines Schlosses, wie dem Zündschloß oder einem Türschloß, angeordnet. Der Tranceiver 1 wirkt einem tragbaren Transponder 2 über eine transformatorische Kopplung zusammen, wenn sich der Transponder 2 in der Nähe des Tranceivers 1 befindet. Der Transponder 2 kann auf einem Zünd- oder Türschlüssel oder auf einer Chipkarte angeordnet sein.

Der Tranceiver 1 überträgt Energie zu dem Transponder 2 (aus diesem Grunde wird der Tranceiver 1 im folgenden als Sender bezeichnet). Eine in dem Transponder 2 gespeicherte Codeinformation wird zu dem Sender zurückübertragen (Energieübertragung und Datenrückübertragung sind durch eine gestrichelt gezeichneten Pfeil dargestellt).

Zur Energieübertragung weist der Sender eine Senderspule 11 auf, die beispielsweise um das Zündschloß gewickelt ist. Die Senderspule 11 wird von einer Erregereinrichtung 4 oder 41 gespeist. Die von dem Transponder 2 zurückübertragene Codeinformation wird von einer Auswerteeinheit 3 ausgewertet. Wenn die Codeinformation als berechtigt erkannt wird, werden entsprechende Steuersignale ausgegeben.

Die Erregereinrichtung ist in Form eines Generators oder eines Oszillators 4 ausgebildet, der eine Wechselspannung oder einen Wechselstrom im Takte einer Oszillatorfrequenz f_{O} schwingt. Die Schwingung wird der Senderspule 11 aufgezwungen. Das von der Senderspule 11 dadurch erregte Feld induziert in einer Transponderspule 21 eine Spannung, da die beiden Spulen 11 und 22 induktiv miteinander gekoppelt sind.

Der Transponder 2 weist einen Lastschalter 25 auf, der in einem Takt mit vorbestimmter und im Transponder 2 gespeicherter Codeinformation zwischen zwei Lastwiderständen 23 und 24 hin und her schaltet. Da die beiden Spulen 11 und 21 induktiv miteinander gekoppelt sind (wie etwa Primär- und Sekundärspule eines Transformators), wird die Schwingung des Senders durch den Transponder 2 im Rhythmus der Codeinformation belastet. Dementsprechend wird die Codeinformation auf den Sender zurückübertragen.

Daher wird die Senderschwingung durch den Transponder 2 belastungsmoduliert. Die Codeinformation wird von der Auswerteeinheit 3 aus der modulierten Schwingung herausgefiltert oder demoduliert und somit erfaßt.

Die Senderspule 11 bildet zusammen mit einem Senderkondensator 12 (Figur 2) einen Senderschwingkreis. Der Schwingkreis wird von dem Oszillator 4 mit der Oszillatorfrequenz f_{O} gespeist und somit zu einer Schwingung angeregt. Zwischen dem Oszillator 4 und dem Schwingkreis kann ein Frequenzteiler 41 angeordnet sein, der die Oszillatorfrequenz f_{O} auf die Erregerfrequenz f_{E} herunterteilt.

Die Schwingung, d.h. die Spannung der Schwingung, wird zwischen der Senderspule 11 und dem Senderkondensator 12 abgegriffen und der Auswerteeinheit 3 zugeführt. Die Auswerteeinheit 3 weist einen Demodulator 31 auf, der Schwingung demoduliert. Ein Komparator 32 vergleicht die Erregerfrequenz f_{E} oder Trägerfrequenz der Schwingung mit einer Sollfrequenz f_{S}. Eine Steuereinheit steuert den Oszillator 4 und zumindest ein Sicherheitsaggregat 34.

Der Transponder 2 weist ebenfalls einen Schwingkreis mit der Transponderspule 21, einem Transponderkondensator 22 und den beiden Lastwiderständen 23 und 24 auf. Die Lastwiderstände 23 und 24 werden durch einen Codegenerator 26 über den Lastschalter 25 im Rhythmus der Codeinformation abwechselnd dem Transponderschwingkreis zugeschaltet. Dadurch wird der Transponderschwingkreis und durch die induktive Kopplung der Senderschwingkreis 11 und 12 im Rhythmus der Codeinformation belastet. Es können auch mehrere unterschiedlich Lastwiderstände vorhanden sein.

Der Codegenerator 26 kann die Codeinformation einem Speicher entnehmen und in entsprechende Schaltsignale für den Lastschalter 25 umsetzten. Als Speicher kann beispielsweise ein ROM oder ein EEPROM verwendet werden. Die Codeinformation kann aber auch hardwaremäßig, beispielsweise in Form einer Schaltungsanordnung, auf dem Transponder 2 enthalten sein. Für die Erfindung ist es jedoch unwesentlich, wie die Codeinformation in dem Transponder 2 enthalten und wie sie zu dem Sender zurückübertragen wird.

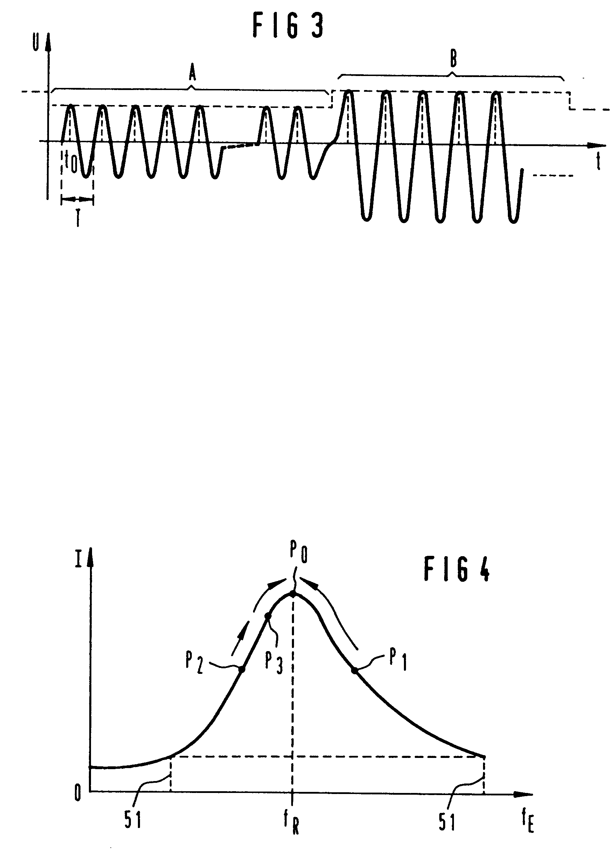

Durch die Erregergröße entsteht eine stationäre erzwungene Schwingung des Senderschwingkreises 11 und 12, der dann mit der Erregerfrequenz f_{E} schwingt. Als Erregergröße wird die Ausgangsspannung oder der Ausgangsstrom des Oszillators 4 verwendet. Jeder Schwingkreis besitzt eine Eigenfrequenz oder auch Resonanzfrequenz f_{R} genannt, die durch die Bauelemente des Schwingkreises, d.h. durch die Senderspule 11 und den Senderkondensator 12, bestimmt wird (vgl. Figur 2). Die erzeugte Feldstärke der Senderspule 11 ist am größten, wenn der Schwingkreis mit der Erregerfrequenz f_{E} gleich der Resonanzfrequenz f_{R} erregt wird (vgl. Figur 4). In diesem Fall wird verständlicherweise die meiste Energie zum Transponder 2 übertragen.

Da zwischen dem Oszillator 4 und dem Senderschwingkreis 11 und 12 ein Frequenzteiler 41 angeordnet sein kann, muß die Oszillatorfrequenz f_{O} nicht mit der Erregerfrequenz f_{E} übereinstimmen. Der Senderschwingkreis 11 und 12 wird jedoch mit der Erregerfrequenz f_{E} zum Schwingen angeregt.

Wenn der Zündschlüssel in das Zündschloß eingeführt wird, so befinden sich die Senderspule 11 und die Transponderspule 21 in unmittelbarer Nähe zueinander. Die beiden Spulen 11 und 12 sind infolgedessen induktiv miteinander derart gekoppelt, daß die Codeinformation auf den Senderschwingkreis 11 und 12 übertragen wird. Dadurch daß der Transponderschwingkreis 21 und 22 abwechselnd mit zwei unterschiedlichen Lastwiderständen 23 und 24 belastet wird, wird der Senderschwingkreis 11 und 12 belastungsmoduliert, und zwar in dem Takt, wie zwischen den Lastwiderständen 23 und 24 hin- und hergeschaltet wird (Figur 3).

Die Belastungsmodulation entspricht einer Amplitudenmodulation (vgl. Figur 3). Die Erregerfrequenz f_{E} (oder auch als Trägerfrequenz bezeichnet) der modulierten Schwingung ändert sich durch die Belastung nicht. Im ersten Abschnitt A der modulierten Schwingung belastet der erste Widerstand den Senderschwingkreis 11 und 12 und im darauf folgenden Abschnitt B belastet der andere Lastwiderstand den Senderschwingkreis 11 und 12.

Jeder Abschnitt besteht aus mehreren Perioden der Erregerschwingung mit jeweils identischen, hintereinanderfolgenden Schwingungszügen mit jeweils gleicher Periodendauer T und jeweils gleicher Amplitude. Nach jeweils einem Abschnitt A oder B ändert sich aufgrund der Modulation mit der Codeinformation die Amplitude und zumeist auch die Phase der Schwingung. Stellvertretend für die gesamte modulierte Schwingung werden daher im folgenden eine Schwingung A während der gesamten Dauer im Abschnitt A und eine Schwingung B während der gesamten Dauer im Abschnitt B betrachtet.

In der Hüllkurve (in der Figur 2 durch die gestrichelte Linie dargestellt) der modulierten Schwingung ist die Codeinformation des Transponders 2 enthalten. Die Amplitude im Abschnitt A entspricht beispielsweise dem Low-Pegel und die Amplitude im Abschnitt B dem High-Pegel. Die Abschnitte A und B können dabei entsprechend der Codeinformation unterschiedlich lang sein (festgelegte Zeitdauern, in den Low- und High-Pegel anliegen). Die Auswerteeinheit 3 filtert diese Codeinformation aus der modulierten Schwingung heraus, d.h. die modulierte Schwingung wird in äquidistanten Abständen zu Zeitpunkten t₀ abgetastet, die abgetasteten Amplituden werden gemessen und ausgewertet.

Diese Codeinformation wird digitalisiert und in der Steuereinheit 33 mit einer gespeicherten Sollcodeinformation verglichen. Wenn die beiden Codeinformationen übereinstimmen, wird ein Freigabesignal an das Sicherheitsaggregat 34 im Kraftfahrzeug geschickt, das ein seinerseits Steuersignal erzeugt. Durch das Steuersignal können Türschlösser ver- oder entriegelt werden sowie die Motorsteuerung angewiesen werden, den Motor zu starten.

Die Leistungsbilanz (d.h. wieviel Leistung zum Transponder 2 übertragen und von dort zurückübertragen wird) wird anhand der Resonanzkurve in Figur 3 verdeutlicht. Bei der Resonanzkurve ist die Erregerfrequenz f_{E} auf der Abszisse (x-Achse) und die Schwingungsintensität I infolge der Erregergröße d.h. die Amplitude der Erregerspannung oder des Erregerstroms, auf der Ordinate (y-Achse) aufgetragen. Weicht die Erregerfrequenz f_{E} von der durch die Bauteile festgelegten Resonanzfrequenz f_{R} ab, so wird die Intensität der Schwingung kleiner und es wird weniger Energie zum Transponder 2 übertragen. Unterhalb einer bestimmten Leistungsgrenze 51 (in der Figur durch die beiden gestrichelten Linien links und rechts der Resonanzfrequenz f_{R} dargestellt) kann aufgrund zu gering übertragener Energie keine auswertbare Modulationsamplitude der Schwingung detektiert werden, d.h. die Amplitude ist dann zu klein.

Infolge von fertigungsbedingten Toleranzen der verwendeten Bauelemente der Schwingkreise oder in Folge von Temperaturänderungen kann es in Ausnahmefällen vorkommen, daß sich zwar die Phase zwischen den Abschnitten A und B ändert, jedoch nicht (oder nur kaum) die Amplitude. Es kann sich auch - bedingt durch die Phasenverschiebung - ergeben, daß gleich große Amplituden zu den Abtastzeitpunkten gemessen werden, obwohl die Hüllkurve deutliche Amplitudensprünge aufweist. Die gemessenen Amplituden in den Abschnitten A und B sind dann in etwa gleich, obwohl sie entsprechend der Codeinformation unterschiedlich sein müßten. Bei einer Belastungsdemodulation wird daher keine Betragsänderung erkannt, d.h. es wird keine Codeinformation erkannt, obwohl der funktionsfähige Transponder 2 auf den Senderschwingkreis 11 und 12 einwirkt.

In solch einer Situation befindet sich der Arbeitspunkt des Schwingkreissystems in einer sogenannten Nullstelle.

Eine solche Lage des Arbeitspunktes ist unerwünscht. Sie könnte mit sehr großem Aufwand vermieden werden, z.B. durch Selektieren der Bauelemente mit nur kleinen Toleranzen, oder durch eine aufwendige Temperaturregelung der gesamten Schaltung.

Erfindungsgemäß wird dies dadurch gelöst, daß die Frequenz f_{E} der modulierten Schwingung gemessen wird, mit einer Sollfrequenz f_{S} verglichen wird und falls die beiden nicht übereinstimmen, wird die Frequenz der modulierten Schwingung auf die Sollfrequenz f_{S} nachgeregelt.

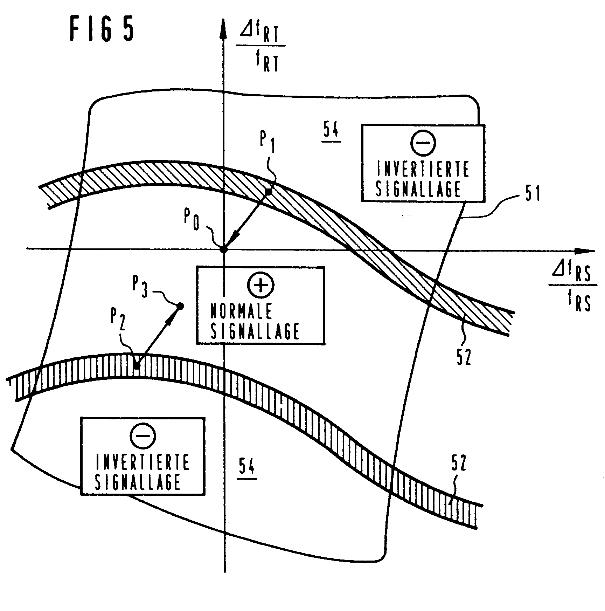

In der Figur 5 ist ein Toleranzlagenschema dargestellt, aus dem die Lage des Arbeitspunktes und die Lage der Nullstellenbereiche 52 hervorgehen. Der Arbeitspunkt des Schwingkreissystems wird durch die Systemparameter Frequenz, Amplitude und Phase der modulierten Schwingung festgelegt. Der Arbeitspunkt ist in Abhängigkeit der Änderung der normierten Resonanzfrequenz des Senders Δf_{RS}/f_{RS} (x-Achse) und der Änderung der normierten Resonanzfrequenz des Transponders 2 Δf_{RT}/f_{RT} (y-Achse) aufgetragen.

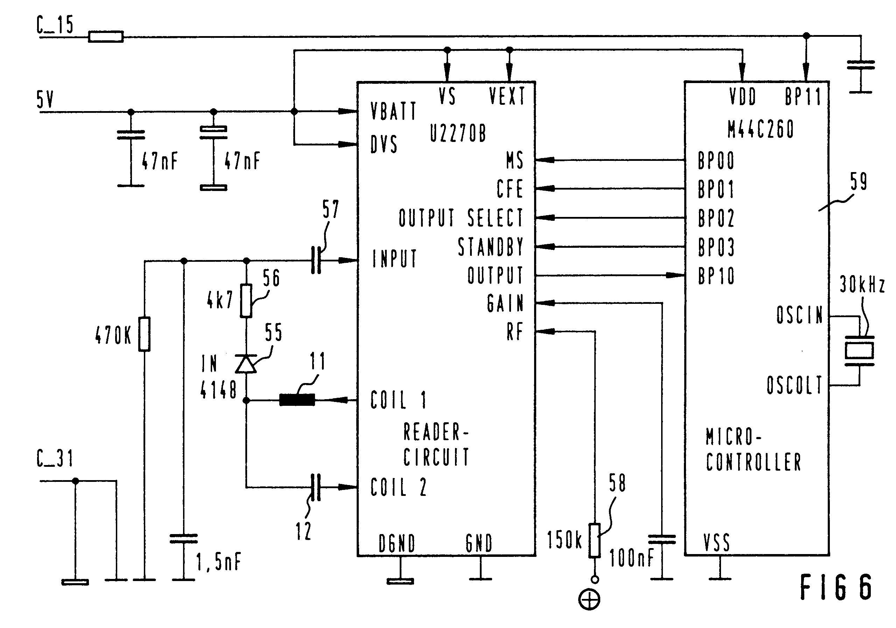

Da die Frequenz von den Werten der Bauelemente und der Temperatur abhängig ist, liegt der Arbeitspunkt bei vorbestimmten Werten der Bauelemente und bei einer bestimmten Temperatur in einem vorbestimmten Punkt der x-y-Ebene von Figur 6.

Die Lage des Arbeitspunktes ist durch die Leistungsgrenze 51 begrenzt, da in einem Arbeitspunkt außerhalb dieser Grenze zu wenig Energie zum Transponder 2 und damit eine zu geringe Modulationsamplitude zu dem Demodulator 31 zurück gelangt, so daß keine Demodulation möglich ist.

Ändert sich die Temperatur oder die Werte der Bauelemente aufgrund von Bauteiletoleranzen, so verschiebt sich der Arbeitspunkt innerhalb der x-y-Ebene. Beim Entwurf und Dimensionierung eines erfindungsgemäßen Diebstahlschutzsystems werden die Werte so berechnet, daß sich der Arbeitspunkt bei einer bestimmten Temperatur möglichst in der Mitte, d.h. im Kreuzungspunkt der Achsen befindet (vgl. Arbeitspunkt P₀). Somit liegt der Arbeitspunkt möglichst weit weg von dem Nullstellenbereich 52. Der Arbeitspunkt befindet sich dann in einer sogenannten "normalen Signallage" 53. In extremen Fällen kann sich der Arbeitspunkt auch jenseits der Nullstellenbereiche in sogenannten "invertierten Signallagen" 54 befinden, die sich von den normalen Signallage 53 nur durch das Vorzeichen unterscheiden.

In einer solchen normalen oder invertierten Signallage 52 oder 53 kann die Codeinformation des Transponders 2 sicher aus der modulierten Schwingung extrahiert werden, da der Demodulator 31 einen genügend große Amplitudenunterschied zwischen den Amplituden in den verschiedenen Abschnitten A, B, ... erfaßt.

Aufgrund von fertigungsbedingten Bauteiletoleranzen oder durch Einfluß der Temperatur kann sich der Arbeitspunkt indes unerwünschterweise soweit verschieben, daß er in einem Nullstellenbereich 52 (schraffierte Bereiche) liegt. In diesem Bereich wird die Codeinformation nicht erkannt, da sich der Betrag der Amplitude nicht oder nur zu wenig gegenüber einem vorhergehenden Abschnitt geändert hat. Daher muß der Arbeitspunkt so beeinflußt werden, daß er wieder in eine sichere Signallage wandert, z.B. möglichst in Richtung der Mitte wandert.

Da sich infolge der Bauteiletoleranzen und des Temperatureinflusses sowohl die Resonanzfrequenz f_{R} als auch die Oszillatorfrequenz f_{O} oder die Erregerfrequenz f_{E} ändert, kann durch Beeinflussen der Erregerfrequenz f_{E} der Arbeitspunkt verschoben werden. Daher wird die Erregerfrequenz f_{E} gemessen, und wenn sie von einem Sollwert abweicht, dann wird sie wieder zurückgeregelt, so daß sie wieder mit der Sollfrequenz f_{S} übereinstimmt.

Bei dem vorliegenden Ausführungsbeispiel liegt die Sollfrequenz f_{S} bei 125 kHz. Auf diese Frequenz wird die Erregerfrequenz f_{E} immer wieder nachgeregelt, falls sie sich durch Bauteiletoleranzen oder in Folge von Temperatureinfluß verstellt haben sollte.

Mit P₀ bis P₃ sind die Arbeitspunkte des Systems bezeichnet. Wenn der Arbeitspunkt P₁ zunächst in einer Nullstelle liegt (d.h. beim ersten Erfassen der modulierten Schwingung wird keine Codeinformation erhalten), wird durch Nachregeln der Erregerfrequenz f_{E} der Arbeitspunkt aus der Nullstelle herausgeführt, beispielsweise zu dem Punkt P₀ (vgl. hierzu Figuren 3 und 5).

Es kann aber auch sein, daß sich das System zunächst in dem Arbeitspunkt P₂ befindet und durch Nachregeln der Frequenz der Arbeitspunkt nicht direkt in den Punkt der maximalen Leistung P₀ gelangt, sondern in den Arbeitspunkt P₃ mit kleinerer Leistung (vgl. hierzu Figur 3).

Um in diesem Falle auf möglichst große Leistungsübertragung zum Transponder 2 zu gelangen, kann der Arbeitspunkt in einem zweiten Schritt in Richtung auf P₀, d.h. auf maximale Leistung bewegt werden. Dies kann durch eine nochmalige Änderung der Erregerfrequenz f_{E} geschehen, wobei die Erregerfrequenz f_{E} dann nicht mehr ganz mit der Sollfrequenz f_{S} übereinstimmt. Der Schwingkreis kann in dem zweiten Schritt auch durch Hinzuschalten einer Induktivität oder Kapazität verstimmt werden, wodurch sich die Resonanzfrequenz f_{R} ändert und sich der Erregerfrequenz f_{E} annähert. Dieser zweite Schritt kann jedoch erst dann ausgeführt werden, wenn im ersten Schritt die Erregerfrequenz f_{E} auf die Sollfrequenz f_{S} nachgeregelt wurde.

Die Erregerfrequenz f_{E} kann auf verschiedene Weise geändert werden. Zum einen kann die Oszillator 4, der auch zum Takten der Steuereinheit 33 vorgesehen sein kann, analog auf die Sollfrequenz f_{S} von 125 kHz zurückgeregelt werden. Es kann aber auch der digitale Frequenzteiler 41 eingesetzt werden, der zwischen den Oszillator 4 und der Senderspule 11 geschaltet ist. Der Frequenzteiler 41 kann in digitalen Schritten so geregelt werden, daß die Erregerfrequenz f_{E} auf die Sollfrequenz f_{S} von 125 kHz zurückgeregelt wird und somit sicher ein Arbeitspunkt außerhalb einer Nullstelle erreicht wird.

In der Figur 6 ist eine Schaltungsanordnung für den Tranceiver 1 dargestellt. Als Demodulator 31 und Schwingungserreger wird ein sogenanntes READER-IC (z.B. U2270B von Telefunken Microelektronik) verwendet. An einem Ausgang "COIL1" liegt die Senderspule 11, die über den Senderkondensator 12 mit einem Eingang "COIL2" des READER-IC verbunden ist. In dem READER-IC wird die Erregerfrequenz f_{E} erzeugt, mit der der Schwingkreis über den Ausgang COIL1 erregt wird. Die Erregerfrequenz kann durch einen Widerstand 58, der mit einem Eingang "RF" des READER-IC's verbunden ist, eingestellt werden.

Zwischen der Senderspule 11 und dem Senderkondensator 12 wird die infolge des Annäherns des Transponders 2 modulierte Schwingung über eine Diode 55, einen Widerstand 56 und einen Kondensator 57 abgegriffen und einem Eingang "INPUT" des READER-IC's zugeführt.

Ein separater Microcontroller 59 steuert das READER-IC. Wenn zunächst keine Codeinformation erhalten wird, so wird über den Eingang "INPUT" des READER-IC's die Frequenz der modulierten Schwingung gemessen. Infolge von Bauteiletoleranzen oder Temperatureinfluß stimmt die Schwingungsfrequenz oder Erregerfrequenz f_{E} nicht mit der Sollfrequenz f_{S} überein. Daher wird die Erregerfrequenz f_{E} auf die Sollfrequenz f_{S} nachgeregelt. Anschließend wird wieder eine Codeinformation erkannt, da sich durch die Änderung der Erregerfrequenz f_{E} der Arbeitspunkt aus der Nullstelle 52 herausbewegt hat. In einem zweiten Schritt kann anschließend der Arbeitspunkt wie vorher beschrieben zur optimalen Leistung hin verschoben werden.

Die Messung der Frequenz der modulierten Schwingung geschieht auf bekannte Weise. So kann direkt die Periodendauer T eines einzelnen Schwingungszuges der modulierten Schwingung gemessen werden. Es kann aber auch die Zeit gemessen werden, die für einen Abschnitt A, B, usw. benötigt wird. Da die Codeinformation und somit die Anzahl der Schwingungen innerhalb eines Abschnittes A, B, usw. bekannt sind, kann daraus die Frequenz der modulierten Schwingung berechnet werden. Es wird deshalb die Impulslänge der Codeinformation gemessen. Eine solche Frequenzmessung ist dann vorteilhaft, wenn die Taktfrequenz des Microcontrollers 59 größer ist als die Frequenz der modulierten Schwingung.

## Patentansprüche

1. Diebstahlschutzsystem für ein Kraftfahrzeug mit
- einem tragbaren Transponder (2), der eine Codeinformation trägt,
- einem Transceiver (1) im Kraftfahrzeug, der einen Schwingkreis (11, 12) aufweist, der durch eine Erregereinrichtung (4), die mit einer Erregerfrequenz (f_{E}) schwingt, zum Schwingen angeregt wird und dessen Schwingung durch den Transponder (2) im Takte der Codeinformation moduliert wird, und
- einem Demodulator (31), dem die modulierte Schwingung des Schwingkreises zugeführt wird,
- wobei die Codeinformation aus der modulierten Schwingung durch Abtasten erhalten, in einer Recheneinheit (33) mit einer Sollcodeinformation verglichen wird und bei Übereinstimmung ein Freigabesignal an ein Sicherheitsaggregat (34) gesendet wird, und
- wobei die Erregerfrequenz (f_{E}) gemessen wird, mit einer Sollfrequenz (f_{S}) verglichen wird und bei Abweichung derart geregelt wird, daß sie mit der Sollfrequenz übereinstimmt, wenn zunächst keine Codeinformation durch die Recheneinheit (33) erkannt wird.

2. Diebstahlschutzsystem nach Anspruch 1, **dadurch gekennzeichnet, daß** der Transponder (2) über eine Transponderspule (21) mit dem Schwingkreis des Transceivers (1) induktiv gekoppelt ist.

3. Diebstahlschutzsystem nach Anspruch 2, **dadurch gekennzeichnet, daß** die Schwingung des Schwingkreises abhängig von der Codeinformation infolge der induktiven Kopplung belastungsmoduliert wird.

4. Diebstahlschutzsystem nach Anspruch 1, **dadurch gekennzeichnet, daß** das Sicherheitsaggregat (34) eine Türverriegelung oder eine Wegfahrsperre ist.

5. Diebstahlschutzsystem nach Anspruch , **dadurch gekennzeichnet, daß** die Erregerfrequenz (f_{E}) durch einen einstellbaren Frequenzteiler (41), der zwischen einem Oszillator (4) und dem Schwingkreis (11, 12) angeordnet ist, verändert wird oder daß die Erregerfrequenz (f_{E}) durch Regeln der Oszillatorfrequenz (f_{O}) geändert wird.
